# EUROPÄISCHE PATENTSCHRIFT

(11) **EP 4 054 789 B1**
(45) Veröffentlichungstag und Bekanntmachung des Hinweises auf die Patenterteilung: **20.08.2025**
(21) Anmeldenummer: 20792384.8
(22) Anmeldetag: 14.10.2020
(51) Int. Cl.: B23K 26/08, G05B 13/02, G05B 19/401, G05B 19/418, B23K 26/03, B23K 26/04

(54) **VERFAHREN ZUM ERKENNEN VON AUSSCHUSS BEI DER BEARBEITUNG BAUGLEICHER WERKSTÜCKE SOWIE ZUGEHÖRIGE NUMERISCH GESTEUERTE WERKSTÜCKBEARBEITUNGSVORRICHTUNG**
METHOD FOR DETECTING REJECTS DURING PROCESSING OF IDENTICAL WORKPIECES AND ASSOCIATED NUMERICALLY CONTROLLED WORKPIECE PROCESSING APPARATUS
PROCÉDÉ D'IDENTIFICATION DE CASSÉS DE FABRICATION LORS DE L'USINAGE DE PIÈCES DE STRUCTURE IDENTIQUE AINSI QUE DISPOSITIF D'USINAGE DE PIÈCES À COMMANDE NUMÉRIQUE ASSOCIÉE

(30) Priorität: 04.11.2019 DE 102019216972
(43) Veröffentlichungstag der Anmeldung: 14.09.2022
(73) Patentinhaber: TRUMPF Laser- und Systemtechnik SE, 71254 Ditzingen (DE)
(72) Erfinder: HAGENLOCHER, Tobias, 71254 Ditzingen (DE); KIEWELER, Thomas, 71299 Wimsheim (DE)
(74) Vertreter: Trumpf Patentabteilung
(86) Internationale Anmeldenummer: PCT/EP2020/078844
(87) Internationale Veröffentlichungsnummer: WO 2021/089282

(56) Entgegenhaltungen:
- WO-A1-2008/014804
- DE-A1- 102010 060 958
- DE-A1- 102011 006 447
- DE-C1- 4 340 395

## Beschreibung

Die vorliegende Erfindung betrifft ein Verfahren zum Erkennen von Ausschuss bei der Bearbeitung baugleicher Werkstücke mittels einer numerisch gesteuerten Werkstückbearbeitungsvorrichtung, umfassend die folgenden Schritte:
a) Bearbeiten eines Werkstücks unter Vorgabe einer Soll-Werkzeugbahn für ein Werkzeug der Werkstückbearbeitungsvorrichtung, und
b) Regeln eines Arbeitsabstands des Werkzeugs vom Werkstück auf einen definierten Sollabstand, so dass das Werkzeug beim Bearbeiten des Werkstücks entlang der Soll-Werkzeugbahn auf einer abstandsgeregelten Ist-Werkzeugbahn bewegt wird.

Ein solches Verfahren und eine zur Durchführung des Verfahrens geeignete Werkstückbearbeitungsvorrichtung sind beispielsweise durch die DE 10 2011 006 447 A1 bekannt geworden.

Bei derartigen Werkstückbearbeitungsvorrichtungen werden die Positionierung und Bewegung eines bei der Bearbeitung der Werkstücke eingesetzten Werkzeugs relativ zu einem Werkstück mittels einer numerischen Maschinensteuerung kontrolliert. Das Werkzeug wird beim Bearbeiten der Werkstücke entlang einer Werkzeugbahn relativ zum Werkzeug bewegt, die üblicherweise auf Grundlage von CAD-Daten zu einer Soll-Geometrie der Werkstücke festgelegt ist (CAD/CAM). Die Werkzeugbahn wird durch bahnbeschreibende NC (Numerical Control)-Daten codiert, die in der Maschinensteuerung hinterlegt sind und die bei der Bearbeitung der Werkstücke mittels eines NC-Programms abgearbeitet werden.

Die Werkstücke weisen in der Praxis jedoch häufig Geometrieabweichungen von der CAD-Soll-Geometrie auf. So können insbesondere Werkstücke, die im Wege eines Umformprozesses gewonnen wurden, wie etwa Tiefziehteile, mitunter auch größere Ungenauigkeiten aufweisen, durch die die Bearbeitung der Werkstücke entlang einer steuerungsseitig fix vorgegebenen Soll-Werkzeugbahn erschwert wird.

So muss im beispielhaften Fall einer Werkstückbearbeitung mittels einer Laserbearbeitungsvorrichtung ein Laserbearbeitungskopf aus prozesstechnischen Gründen einen stets sehr konstanten Arbeitsabstand von beispielsweise 1 mm von dem Werkstück aufweisen. Da die Werkstückungenauigkeiten jedoch häufig um ein Vielfaches größer sind, ist in den Laserbearbeitungskopf üblicherweise eine Abstandsmesseinrichtung zum Messen des jeweiligen Arbeitsabstands des Laserbearbeitungskopfs von dem zu bearbeitenden Werkstück integriert. Der Arbeitsabstand wird dann steuerungsseitig auf Grundlage der ermittelten Abstandswerte auf einen vorgegebenen Sollabstand geregelt. Dieser Regelkreis ist der Bewegungssteuerung des Laserbearbeitungskopfs entlang der von der NC-Maschinensteuerung vorgegebenen Soll-Werkzeugbahn überlagert und wird als Abstandsregelung bezeichnet.

Der Istwert einer Regelung weist in der Praxis im Allgemeinen eine der auszuregelnden Stellgröße entsprechende Abweichung auf. Die Regelparameter sind im Allgemeinen relativ niedrig, so dass sich größere Werkstückungenauigkeiten negativ auf den Bearbeitungsprozess auswirken können. Übersteigen die Werkstückungenauigkeiten ein bestimmtes Maß, so kann die Abstandsregelung die Differenz nicht hinreichend nachregeln, was zu Kollisionen des Werkzeugs mit dem bearbeiteten Werkstück bzw. zu einem Prozessabriss führen kann. In diesem Fall muss die steuerungsseitig vorgegebene Soll-Werkzeugbahn, d.h. das NC-Programm, in der Regel manuell nachkorrigiert werden. Dieser Prozess liegt in der Maschinenhauptzeit und ist somit kostenintensiv.

Aus der eingangs genannten DE 10 2011 006 447 A1 ist ein Verfahren zur Bearbeitung baugleicher Werkstücke bekannt, bei dem ein Werkstück unter Vorgabe einer optimierten Soll-Werkzeugbahn für das Werkzeug der Werkstückbearbeitungsvorrichtung bearbeitet wird. Die optimierte Soll-Werkzeugbahn für ein zu bearbeitendes Werkstück entspricht dabei der jeweiligen abstandsgeregelten Ist-Werkzeugbahn des Werkzeugs bei der Bearbeitung des jeweils zuvor bearbeiteten Werkstücks. Die Werkstückgüte wird anhand der abstandsgeregelten Ist-Werkzeugbahn bewertet.

Bei der Serienproduktion von 3D-Bauteilen kann es zu Abweichungen der Bauteilgeometrie kommen. Zusätzliche Abweichungen entstehen beim Einlegeprozess in die Werkstückbearbeitungsvorrichtung. Aufgrund des Bearbeitungsprozesses mit Abstandsregelung kann es daher zu Konturfehlern kommen. Mit den aktuellen Messverfahren können nur durch kostenintensive Kontrolle aller Bauteile solche Fehler erkannt werden. Gelangen fehlerhafte Bauteile in die folgende Produktion, ist dies mit hohen Kosten verbunden.

Demgegenüber ist es die Aufgabe der vorliegenden Erfindung, bei einem Verfahren der eingangs genannten Art fehlerhafte Werkstücke möglichst frühzeitig als Ausschuss zu erkennen und insbesondere auch eine optimierte Soll-Werkzeugbahn anzugeben, die genauer an den Oberflächenverlauf der noch zu bearbeitenden, baugleichen Werkstücke angepasst ist. Es ist ferner Aufgabe der Erfindung, eine Werkstückbearbeitungsvorrichtung zur Durchführung des Verfahrens bereitzustellen.

Diese Aufgabe wird bei dem eingangs genannten Verfahren erfindungsgemäß dadurch gelöst, dass überprüft wird, ob die abstandsgeregelte Ist-Werkzeugbahn von der für dieses Werkstück geltenden Soll-Werkzeugbahn an ausgewählten, bevorzugt nicht-schleppfehlerbehafteten Konturabschnitten des bearbeiteten Werkstücks um weniger als einen vorgegebenen Toleranzwert abweicht, und dass, wenn ja, mit der Bearbeitung des nächsten Werkstücks fortgefahren wird oder, wenn nein, eine Nachricht ausgegeben wird, dass das bearbeitete Werkstück als Ausschuss erkannt wurde.

Erfindungsgemäß wird die Werkstückgüte eines bearbeiteten Werkstücks anhand einer Bahnabweichung der abstandsgeregelten Ist-Werkzeugbahn von der für dieses Werkstück geltenden Soll-Werkzeugbahn bestimmt und bei Überschreiten einer vorgegebenen Mindestgüte das Werkstück als Ausschuss erkannt und ggf. einer definierten Fehlerbehandlung, wie z.B. einer messtechnischen Prüfung, Nachbearbeitung oder Verschrottung, unterworfen. Dabei wird insbesondere aus während der Bearbeitung gespeicherten Daten die abstandsgeregelte Ist-Werkzeugbahn eines bearbeiteten Werkstücks berechnet und dabei Konturabschnitte der Werkstückoberfläche identifiziert, die durch ihren Konturverlauf zur Bewertung der Werkstückgüte geeignet sind. Liegen die ermittelten Abweichungen außerhalb der vom Kunden vorgegebenen Toleranzen, wird ein entsprechender Hinweis ausgegeben. Insbesondere können geeignete Konturabschnitte im Rahmen des erfindungsgemäßen Bearbeitungsverfahrens automatisch ermittelt werden.

Besonders bevorzugt erfolgt die Überprüfung der Abweichung an nicht-schleppfehlerbehafteten Konturabschnitten, also z.B. an ebenen, insbesondere geraden, kreisförmigen oder kreisbogenförmigen Konturabschnitten. Schleppfehler treten insbesondere an Werkstückkanten auf und führen zu einer Verrundung der abstandsgeregelten Ist-Werkzeugbahn. Um bei schleppfehlerbehafteten Konturabschnitten des bearbeiteten Werkstücks einen Schleppfehler aus der Abweichung der abstandsgeregelten Ist-Werkzeugbahn von der für dieses Werkstück geltenden Soll-Werkzeugbahn herauszurechnen, wird erfindungsgemäß in Schritt c) zusätzlich der gemessene Arbeitsabstand des Werkzeugs vom Werkstück berücksichtigt. Ändert sich an einem Konturabschnitt beispielsweise der gemessene Arbeitsabstand sprunghaft, obwohl sich die abstandsgeregelte Ist-Werkzeugbahn nicht ändert, liegt ein Schleppfehler vor. Die abstandsgeregelte Ist-Werkzeugbahn muss an diesem Konturabschnitt zunächst um den gemessenen Arbeitsabstand korrigiert werden, bevor die Abweichung von der Soll-Werkzeugbahn ermittelt wird.

Besonders bevorzugt wird für ein als nächstes zu bearbeitendes Werkstück eine optimierte Soll-Werkzeugbahn anhand der abstandsgeregelten Ist-Werkzeugbahnen mehrerer zuvor bearbeiteter Werkstücke ermittelt und dann das nächste Werkstück unter Vorgabe der optimierten Soll-Werkzeugbahn bearbeitet. Je mehr Werkstücke bearbeitet wurden, desto mehr abstandsgeregelte Ist-Werkzeugbahnen stehen zur Bestimmung der optimierten Soll-Werkzeugbahn zur Verfügung und desto besser kann die optimierte Soll-Werkzeugbahn an den Oberflächenverlauf der noch zu bearbeitenden baugleichen Werkstücke angepasst werden. Die optimierte Soll-Werkzeugbahn wird aus den bisher bearbeiteten baugleichen Werkstücken insbesondere adaptiv berechnet. Die Ermittlung der optimierten Soll-Werkzeugbahn erfolgt anhand real bearbeiteter Werkstücke. Das Verfahren ist unabhängig von weiteren Sollvorgaben; insbesondere sind keine CAD-Vorgaben erforderlich. Die Werkstücklage kann während der Bearbeitung überwacht und ein Vergleich mit der optimierten Soll-Werkzeugbahn durchgeführt werden. Änderungen der Werkstücke erfordern kein erneutes Einrichten des Bearbeitungsverfahrens. Das erfindungsgemäße Bearbeitungsverfahren eignet sich gut zur Automatisierung, und eine Verschmutzung oder Dejustage der Werkstücke wird durch das Bearbeitungsverfahren vermieden. Die im Rahmen des Bearbeitungsverfahrens durchgeführten Messungen, unter anderem zur Regelung des Arbeitsabstandes, lassen sich auf stabile Weise durchführen. Dabei wird der Arbeitsabstand insbesondere in einer Richtung senkrecht zur Oberfläche des bearbeiteten Werkstücks bestimmt. Die durchgeführten Schritte lassen sich unter Vornahme einer Werkstückzuordnung dokumentieren.

Bevorzugt wird die abstandsgeregelte Ist-Werkzeugbahn eines bearbeiteten Werkstücks, das als Ausschuss erkannt wurde, nicht bei der Ermittlung der optimierten Soll-Werkzeugbahn für die nächsten Werkstücke verwendet. Liegt die gemessene Bahnabweichung bei dem aktuell bearbeiteten Werkstück innerhalb der Toleranz, so wird eine gewichtete Aktualisierung der bestehenden optimierten Soll-Werkzeugbahn unter Berücksichtigung der abstandsgeregelten Ist-Werkzeugbahn bei dem aktuell bearbeiteten Werkstück durchgeführt. Die Bahnabweichung bestimmt sich insbesondere durch den Abstand zwischen Punkten der abstandsgeregelten Ist-Werkzeugbahn und der zugehörigen optimierten Soll-Werkzeugbahn, die jeweils paarweise in einer Richtung senkrecht zur Oberfläche des bearbeiteten Werkstücks liegen.

Weiter bevorzugt wird die optimierte Soll-Werkzeugbahn für das nächste Werkstück anhand der abstandsgeregelten Ist-Werkzeugbahnen all derjenigen zuvor bearbeiteten Werkstücke ermittelt, die nicht als Ausschuss erkannt wurden.

Vorzugsweise wird die optimierte Soll-Werkzeugbahn durch eine insbesondere gewichtete Mittelung der abstandsgeregelten Ist-Werkzeugbahnen der mehreren zuvor bearbeiteten Werkstücke ermittelt. Durch die Mittelung lässt sich die optimierte Soll-Werkzeugbahn auf einfache Weise aus den abstandsgeregelten Ist-Werkzeugbahnen bestimmen. Die Mittelung erfolgt bei einigen Ausgestaltungen über Punkte der abstandsgeregelten Ist-Werkzeugbahnen, die in vorgegebenen Abständen entlang der abstandsgeregelten Ist-Werkzeugbahnen liegen. Alternativ oder zusätzlich erfolgt die Mittelung über Positionen bzw. Punkte, die das Werkzeug bei der Bearbeitung der Werkstücke jeweils nach vorgegebenen Zeitintervallen auf den abstandsgeregelten Ist-Werkzeugbahnen einnimmt. Die Mittelung erfolgt bei weiteren Ausgestaltungen über die optimierten Soll-Werkzeugbahnen eines oder mehrerer zuvor bearbeiteter Werkstücke.

Bevorzugt werden bei der Bearbeitung eines Werkstücks die Achspositionen des Werkzeugs entlang/um dessen Bewegungsachsen, insbesondere hauptzeitparallel, erfasst und die jeweilige abstandsgeregelte Ist-Werkzeugbahn auf Grundlage der erfassten Achspositionen bestimmt. Während der Bearbeitung des Werkstücks, vorzugsweise der Laserbearbeitung, werden insbesondere fortlaufend Signale gemessen, welche die Rekonstruktion der abstandsgeregelten Ist-Werkzeugbahn erlauben. Die Achspositionen sind bei einer NC-gesteuerten Werkstückbearbeitungsvorrichtung Regelparameter und liegen steuerungsseitig ohnehin vor bzw. sind über vorhandene Sensoren der Werkstückbearbeitungsvorrichtung einfach zu erfassen.

Die Erfindung betrifft auch eine Werkstückbearbeitungsvorrichtung mit einem Werkzeug, mit einer Abstandsmesseinrichtung zum Messen eines jeweiligen Arbeitsabstands des Werkzeugs von einem Werkstück und mit einer Maschinensteuerung, die das Werkzeug beim Bearbeiten eines Werkstücks entlang einer abstandsgeregelten Ist-Werkzeugbahn bewegt und die programmiert ist, das oben beschriebene Verfahren auszuführen. Durch eine solche Werkstückbearbeitungsvorrichtung lassen sich Werkstücke auf adaptive Weise ohne Vorgabe weiterer Soll-Vorgaben bearbeiten.

Weitere Vorteile und vorteilhafte Ausgestaltungen des Gegenstands der Erfindung sind der Beschreibung, der Zeichnung und den Ansprüchen entnehmbar.

Es zeigen:
- Fig. 1: eine erfindungsgemäße Werkstückbearbeitungsvorrichtung mit einem von einer numerischen Steuereinrichtung gesteuerten Werkzeug während der Bearbeitung eines Werkstücks, in einer Seitenansicht; und
- Fig. 2: ein Flussdiagramm einer Ausführungsform des erfindungsgemäßen Verfahrens.

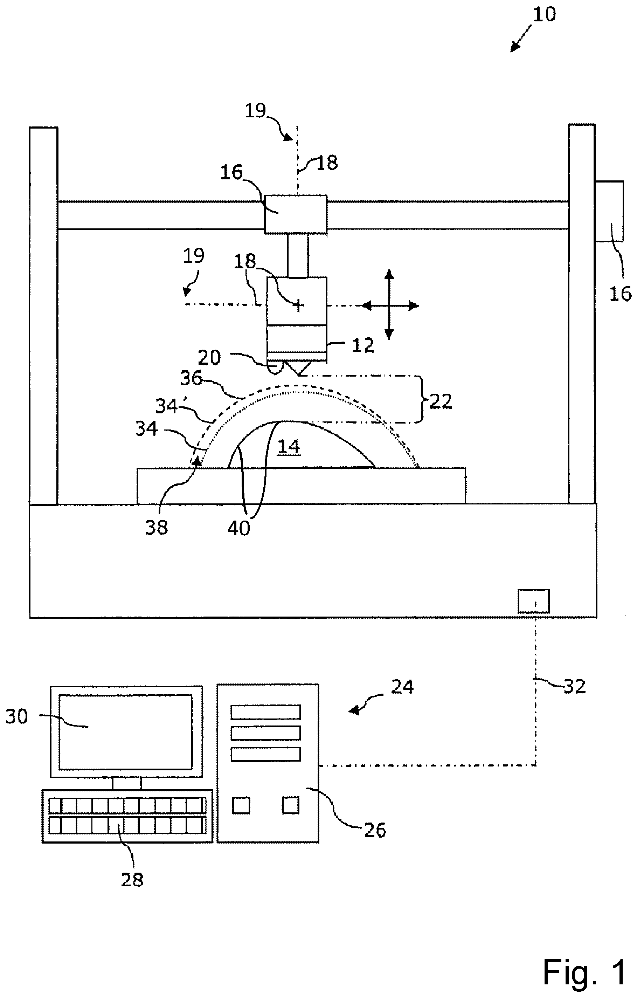

**Fig. 1** zeigt eine als Laserbearbeitungsvorrichtung ausgebildete Werkstückbearbeitungsvorrichtung **10** mit einem (Laser-)Werkzeug **12,** in einer Seitenansicht. Das Werkzeug 12 ist zum Bearbeiten eines Werkstücks **14** mittels mehrerer Stellantriebe **16** entlang/um mehrere Bewegungsachsen **18** relativ zu dem Werkstück 14 bewegbar. Die Achspositionen des Werkzeugs 12 sind mit **19** bezeichnet. Eine an dem Werkzeug 12 angeordnete, optische oder kapazitive Abstandsmesseinrichtung **20** dient zum Messen eines jeweiligen Arbeitsabstands **22** des Werkzeugs 12 vom Werkstück 14.

Eine numerische Maschinensteuerung **24** umfasst einen Computer **26,** eine mit dem Computer **26** verbundene Eingabeeinheit **28** und einen Monitor **30.** Der Computer 26 ist über eine Steuerleitung **32** mit den Stellantrieben 16 und der Abstandsmesseinrichtung 20 des Werkzeugs 12 verbunden und dient einer Bewegungssteuerung des Werkzeugs 12 entlang einer von der Maschinensteuerung 24 vorgegebenen Soll-Werkzeugbahn **34** sowie einer Regelung des Arbeitsabstands 22 des Werkzeugs 12 auf einen in der Maschinensteuerung 24 gespeicherten Sollabstand.

In Fig. 1 ist die von der Maschinensteuerung 24 vorgegebene Soll-Werkzeugbahn 34, entlang derer das Werkzeug 12 bei der Bearbeitung des Werkstücks 14 verstellt wird, mit punktierter Linie dargestellt. Eine Ist-Werkzeugbahn **36,** auf der das Werkzeug 12 während der Bearbeitung des Werkstücks 14 aufgrund der Abstandsregelung bewegt wird, ist mit gestrichelter Linie wiedergegeben. Diese abstandsgeregelte Ist-Werkzeugbahn 36 des Werkzeugs 12 weist vorliegend eine mit dem Pfeil **38** bezeichnete Bahnabweichung von der Soll-Werkzeugbahn 34 auf. Aus der abstandsgeregelten Ist-Werkzeugbahn 36 des Werkzeugs 12 lässt sich zusammen mit nicht gezeigten, abstandsgeregelten Ist-Werkzeugbahnen zuvor bearbeiteter Werkstücke eine optimierte Soll-Werkzeugbahn **34'** bestimmen, entlang derer das Werkzeug 12 bei der Bearbeitung des nächsten baugleichen Werkstücks 14 relativ zum Werkstück 14 bewegt werden soll. Die Bahnabweichung 38 wird bevorzugt an nicht-schleppfehlerbehafteten, wie z.B. ebenen, insbesondere geraden, kreisförmigen oder kreisbogenförmigen, Konturabschnitten 40 der Werkstückoberfläche ermittelt.

Nach der Bearbeitung eines Werkstücks 12 wird überprüft, ob die abstandsgeregelte Ist-Werkzeugbahn 36 von der für dieses Werkstück 14 geltenden Soll-Werkzeugbahn 34 an den ausgewählten Konturabschnitten 40 des bearbeiteten Werkstücks 14 um weniger als einen vorgegebenen Toleranzwert abweicht. Wenn ja, wird mit der Bearbeitung des nächsten Werkstücks 14 fortgefahren oder, wenn nein, wird eine Nachricht an das Bedienpersonal ausgegeben, dass das bearbeitete Werkstück 14 als Ausschuss erkannt wurde.

Schleppfehler treten insbesondere an Werkstückkanten auf und führen zu einer Verrundung der abstandsgeregelten Ist-Werkzeugbahn 36. Um bei schleppfehlerbehafteten Konturabschnitten des bearbeiteten Werkstücks 14 einen Schleppfehler aus der Abweichung der abstandsgeregelten Ist-Werkzeugbahn 36 von der für dieses Werkstück geltenden Soll-Werkzeugbahn 34 herauszurechnen, wird zusätzlich der gemessene Arbeitsabstand 22 des Werkzeugs 12 vom Werkstück 14 berücksichtigt. Ändert sich an einem Konturabschnitt beispielsweise der gemessene Arbeitsabstand 22 sprunghaft, obwohl sich die abstandsgeregelte Ist-Werkzeugbahn 36 nicht ändert, liegt ein Schleppfehler vor. Die abstandsgeregelte Ist-Werkzeugbahn 36 muss an diesem Konturabschnitt zunächst um den gemessenen Arbeitsabstand 22 korrigiert werden, bevor dann die Bahnabweichung 38 von der Soll-Werkzeugbahn 34 ermittelt wird.

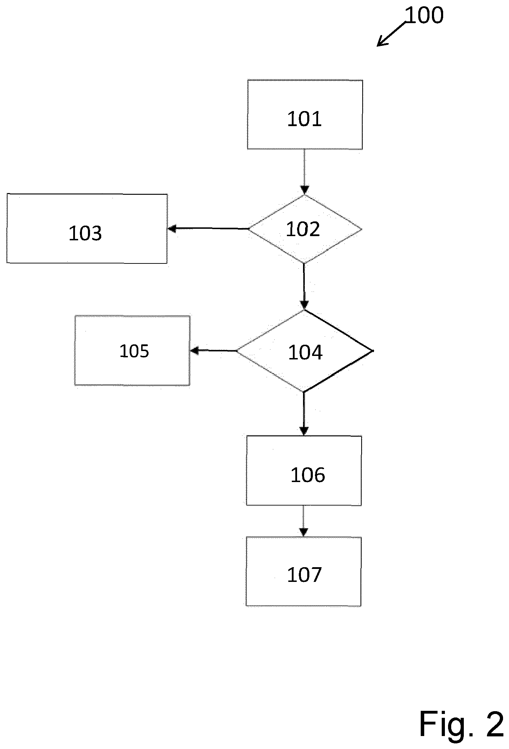

In **Fig. 2** ist ein erfindungsgemäßes Verfahren **100** zum Erkennen von Ausschuss und zum Ermitteln der optimierten Soll-Werkzeugbahn 34' bei der Bearbeitung von baugleichen Werkstücken 14 schematisch dargestellt.

In einem ersten Schritt **101** wird die während der Bearbeitung eines Werkstücks 14 abstandsgeregelte Ist-Werkzeugbahn 36 eines Werkzeugs 12 bereitgestellt. Dazu werden während der Bearbeitung des Werkstücks 14 fortlaufend Signale der Stellantriebe 16 gemessen, welche die Rekonstruktion der abstandsgeregelten Ist-Werkzeugbahn 36 erlauben.

In einem zweiten Schritt **102** wird geprüft, ob bereits eine optimierte Soll-Werkzeugbahn 34' vorliegt, die bei der Bearbeitung eines oder mehrerer zuvor bearbeiteter baugleicher Werkstücke 14 ermittelt wurde.

Falls eine solche optimierte Soll-Werkzeugbahn 34' nicht vorhanden ist, also es sich bei dem Werkstück 14 um ein neues (erstes) Bauteil handelt, werden in einem dritten Schritt **103** diejenigen Konturabschnitte 40 des Werkstücks 14 bestimmt, die zur Ermittlung einer optimierten Soll-Werkzeugbahn 34' geeignet sind. Für dieses neue Bauteil wird die abstandsgeregelte Ist-Werkzeugbahn 36 als optimierte Soll-Werkzeugbahn 34' festgelegt.

Falls eine optimierte Soll-Werkzeugbahn 34' bereits vorhanden ist, wird in einem vierten Schritt **104** geprüft, ob an den ausgewählten Konturabschnitten 40 die Bahnabweichung 38 der abstandsgeregelten Ist-Werkzeugbahn 36 von der für das aktuelle Werkstück geltenden, optimierten Soll-Werkzeugbahn 34' um weniger als einen vorgegebenen Toleranzwert abweicht.

Falls die Bahnabweichung 38 unter dem vorgegebenen Toleranzwert liegt, wird in einem fünften Schritt **105** sowohl anhand dieser aktuellen, abstandsgeregelten Ist-Werkzeugbahn 36 als auch anhand der abstandsgeregelten Ist-Werkzeugbahnen 36 all derjenigen zuvor bearbeiteten Werkstücke 14, bei denen die abstandsgeregelte Ist-Werkzeugbahn 36 von der für das jeweilige Werkstück 14 geltenden, optimierten Soll-Werkzeugbahn 34' um weniger als einen vorgegebenen Toleranzwert abweicht, die optimierte Soll-Werkzeugbahn 34' für das nächste Werkstück 14 ermittelt. Dabei können die einzelnen abstandsgeregelten Ist-Werkzeugbahnen 36 gleich oder unterschiedlich gewichtet werden. Beispielsweise können die abstandsgeregelten Ist-Werkzeugbahnen 36 von jüngeren Werkstücken 14 stärker als die abstandsgeregelten Ist-Werkzeugbahnen 36 von älteren Werkstücken 14 gewichtet werden.

Falls die Bahnabweichung 38 nicht unter dem vorgegebenen Toleranzwert liegt, wird in einem sechsten Schritt **106** die abstandsgeregelte Ist-Werkzeugbahn 36 in Bezug auf die Bestimmung der optimierten Soll-Werkzeugbahn 34' verworfen.

In einem siebten Schritt **107** wird das Werkstück 14 als Ausschuss erkannt und aussortiert oder einer Nachbearbeitung unterworfen.

## Patentansprüche

1. Verfahren zum Erkennen von Ausschuss bei der Bearbeitung baugleicher Werkstücke (14) mittels einer numerisch gesteuerten Werkstückbearbeitungsvorrichtung (10), umfassend die folgenden Schritte:
a) Bearbeiten eines Werkstücks (14) unter Vorgabe einer Soll-Werkzeugbahn (34) für ein Werkzeug (12) der Werkstückbearbeitungsvorrichtung (10),
b) Regeln eines Arbeitsabstands (22) des Werkzeugs (12) vom Werkstück (14) auf einen definierten Sollabstand, so dass das Werkzeug (12) beim Bearbeiten des Werkstücks (14) entlang der Soll-Werkzeugbahn (34) auf einer abstandsgeregelten Ist-Werkzeugbahn (36) bewegt wird,
c) Überprüfen, ob die abstandsgeregelte Ist-Werkzeugbahn (36) von der für dieses Werkstück (14) geltenden Soll-Werkzeugbahn (34) an ausgewählten, bevorzugt nicht-schleppfehlerbehafteten Konturabschnitten (40) des bearbeiteten Werkstücks (14) um weniger als einen vorgegebenen Toleranzwert abweicht, und
d) wenn ja, Fortfahren mit der Bearbeitung des nächsten Werkstücks (14) oder, wenn nein, Ausgeben einer Nachricht, dass das bearbeitete Werkstück (14) als Ausschuss erkannt wurde,
**dadurch gekennzeichnet, dass**
in Schritt c) zusätzlich der gemessene Arbeitsabstand (22) des Werkzeugs (12) vom Werkstück (14) berücksichtigt wird, um so bei schleppfehlerbehafteten Konturabschnitten (40) des bearbeiteten Werkstücks (14) einen Schleppfehler aus der Abweichung der abstandsgeregelten Ist-Werkzeugbahn (36) von der für dieses Werkstück (14) geltenden Soll-Werkzeugbahn (34) herauszurechnen.

2. Verfahren nach Anspruch 1, **dadurch gekennzeichnet, dass** ein als Ausschuss erkanntes, bearbeitetes Werkstück (14) einer Fehlerbehandlung, insbesondere einer messtechnischen Prüfung, Nachbearbeitung oder Verschrottung, unterworfen wird.

3. Verfahren nach Anspruch 1 oder 2, **dadurch gekennzeichnet, dass** für ein als nächstes zu bearbeitendes Werkstück (14) eine optimierte Soll-Werkzeugbahn (34') anhand der abstandsgeregelten Ist-Werkzeugbahnen (36) mehrerer zuvor bearbeiteter Werkstücke (14) ermittelt wird und dass das nächste Werkstück (14) unter Vorgabe der optimierten Soll-Werkzeugbahn (34') bearbeitet wird.

4. Verfahren nach Anspruch 3, **dadurch gekennzeichnet, dass** die abstandsgeregelte Ist-Werkzeugbahn (36) eines bearbeiteten Werkstücks (14), das als Ausschuss erkannt wurde, nicht bei der Ermittlung der optimierten Soll-Werkzeugbahn (34') für die nächsten Werkstücke (14) verwendet wird.

5. Verfahren nach Anspruch 3 oder 4, **dadurch gekennzeichnet, dass** die optimierte Soll-Werkzeugbahn (34') für das nächste Werkstück (14) anhand der abstandsgeregelten Ist-Werkzeugbahnen (36) all derjenigen zuvor bearbeiteten Werkstücke (14) ermittelt wird, die nicht als Ausschuss erkannt wurden.

6. Verfahren nach einem der Ansprüche 3 bis 5, **dadurch gekennzeichnet, dass** die optimierte Soll-Werkzeugbahn (34') durch eine insbesondere gewichtete Mittelung der abstandsgeregelten Ist-Werkzeugbahnen (36) der mehreren zuvor bearbeiteten Werkstücke (14) ermittelt wird.

7. Verfahren nach einem der vorhergehenden Ansprüche, **dadurch gekennzeichnet, dass** bei der Bearbeitung eines Werkstücks (14) Achspositionen (19) des Werkzeugs (12) entlang/um dessen Bewegungsachsen (18), insbesondere hauptzeitparallel, erfasst und die jeweilige abstandsgeregelte Ist-Werkzeugbahn (36) auf Grundlage der erfassten Achspositionen (19) bestimmt wird.

8. Verfahren nach einem der vorhergehenden Ansprüche, **dadurch gekennzeichnet, dass** die ausgewählten Konturabschnitte (40) des bearbeiteten Werkstücks (14) eben, insbesondere gerade, kreisförmig oder kreisbogenförmig, sind.

9. Werkstückbearbeitungsvorrichtung (10) mit einem Werkzeug (12), mit einer Abstandsmesseinrichtung (20) zum Messen eines jeweiligen Arbeitsabstands (22) des Werkzeugs (12) von einem Werkstück (14) und mit einer Maschinensteuerung (24), die das Werkzeug (12) beim Bearbeiten eines Werkstücks (14) entlang einer abstandsgeregelten Ist-Werkzeugbahn (36) bewegt, **dadurch gekennzeichnet, dass** die Maschinensteuerung (24) programmiert ist, ein Verfahren nach einem der vorhergehenden Ansprüche auszuführen.

## Claims

1. A method for recognizing rejects when processing workpieces (14) identical in structure by means of a numerically controlled workpiece processing device (10), comprising the following steps:
a) processing a workpiece (14) by specifying a nominal tool path (34) for a tool (12) of the workpiece processing device (10),
b) controlling a working distance (22) of the tool (12) from the workpiece (14) to a defined nominal distance, so that the tool (12) is moved along the nominal tool path (34) on a distance-controlled actual tool path (36) during processing of the workpiece (14),
c) checking whether the distance-controlled actual tool path (36) deviates from the nominal tool path (34) applicable for this workpiece (14) by less than a predetermined tolerance value at selected contour sections (40) of the processed workpiece (14) that are preferably not prone to contouring errors, and
d) if so, continuing with the processing of the next workpiece (14) or, if not, outputting a message that the processed workpiece (14) has been recognized as scrap,
**characterized in that**
in step c) the measured working distance (22) of the tool (12) from the workpiece (14) is also taken into account in order to calculate a contouring error from the deviation of the distance-controlled actual tool path (36) from the nominal tool path (34) applicable to this workpiece (14) in the case of contour sections (40) of the processed workpiece (14) that are prone to contouring errors.

2. The method according to claim 1, **characterized in that** a processed workpiece (14) recognized as scrap is subjected to error handling, in particular a metrological inspection, reworking or scrapping.

3. The method according to claim 1 or 2, **characterized in that** an optimized nominal tool path (34') is determined for a workpiece (14) to be processed next on the basis of the distance-controlled actual tool paths (36) of a plurality of previously processed workpieces (14), and **in that** the next workpiece (14) is processed by specifying the optimized nominal tool path (34').

4. The method according to claim 3, **characterized in that** the distance-controlled actual tool path (36) of a processed workpiece (14) that has been recognized as scrap is not used when determining the optimized nominal tool path (34') for the next workpieces (14).

5. The method according to claim 3 or 4, **characterized in that** the optimized nominal tool path (34') for the next workpiece (14) is determined on the basis of the distance-controlled actual tool paths (36) of all previously processed workpieces (14) that were not recognized as rejects.

6. The method according to one of claims 3 to 5, **characterized in that** the optimized target tool path (34') is determined by an in particular weighted averaging of the distance-controlled actual tool paths (36) of the plurality of previously processed workpieces (14).

7. The method according to one of the preceding claims, **characterized in that**, when processing a workpiece (14), axis positions (19) of the tool (12) are detected along/around its axes of movement (18), in particular parallel to the main time, and the respective distance-controlled actual tool path (36) is determined on the basis of the detected axis positions (19).

8. The method according to one of the preceding claims, **characterized in that** the selected contour sections (40) of the processed workpiece (14) are flat, in particular straight, circular or circular arc-shaped.

9. A workpiece processing device (10) with a tool (12), with a distance measuring device (20) for measuring a respective working distance (22) of the tool (12) from a workpiece (14) and with a machine control system (24) which moves the tool (12) along a distance-controlled actual tool path (36) when processing a workpiece (14), **characterized in that** the machine control system (24) is programmed to execute a method according to one of the preceding claims.

## Revendications

1. Procédé de détection de rebuts lors de l'usinage de pièces (14) de conception identique à l'aide d'un dispositif d'usinage de pièces (10) à commande numérique, comprenant les étapes suivantes :
a) l'usinage d'une pièce (14) en suivant une trajectoire de consigne de l'outil (34) pour un outil (12) du dispositif d'usinage de pièces (10),
b) la régulation d'une distance de travail (22) entre l'outil (12) et la pièce (14) à une distance de consigne définie, de sorte que l'outil (12) se déplace, lors de l'usinage de la pièce (14), le long de la trajectoire de consigne de l'outil (34) sur une trajectoire réelle de l'outil (36) régulée en distance,
c) la vérification si la trajectoire réelle de l'outil (36) régulée en distance ne s'écarte de la trajectoire de consigne de l'outil (34) applicable pour cette pièce (14) que de moins qu'une valeur de tolérance prédéfinie sur des sections de contour (40) sélectionnées de la pièce (14) usinée, de préférence exemptes d'erreurs de glissement, et
d) si tel est le cas, la poursuite de l'usinage de la pièce (14) suivante, ou, dans le cas contraire, émission d'un message indiquant que la pièce (14) usinée a été reconnue comme rebut,
**caractérisé en ce que**,
à l'étape c), en plus, la distance de travail (22) mesurée entre l'outil (12) et la pièce (14) est en outre prise en compte, de manière à éliminer ainsi, sur les sections de contour (40) affectées par des erreurs de glissement de la pièce (14) usinée, une erreur de glissement provenant de l'écart entre la trajectoire réelle de l'outil (36) régulée en distance et la trajectoire de consigne de l'outil (34) applicable à cette pièce (14).

2. Procédé selon la revendication 1, **caractérisé en ce qu'**une pièce (14) usinée reconnue comme rebut est soumise à un traitement de défaut, en particulier un contrôle métrologique, un réusinage ou une mise au rebut.

3. Procédé selon la revendication 1 ou 2, **caractérisé en ce que**, pour une pièce (14) suivante à usiner, une trajectoire de consigne de l'outil (34') optimisée est établie en fonction des trajectoires réelles de l'outil (36) régulées en distance de plusieurs pièces (14) usinées précédemment, et **en ce que** la pièce (14) suivante est usinée en suivant la trajectoire de consigne de l'outil (34') optimisée.

4. Procédé selon la revendication 3, **caractérisé en ce que** la trajectoire réelle de l'outil (36) régulée en distance d'une pièce (14) usinée qui a été reconnue comme rebut n'est pas utilisée dans la détermination de la trajectoire de consigne de l'outil (34') optimisée pour les pièces (14) suivantes.

5. Procédé selon la revendication 3 ou 4, **caractérisé en ce que** la trajectoire de consigne de l'outil (34') optimisée pour la pièce (14) suivante est établie en fonction des trajectoires réelles de l'outil (36) régulées en distance de toutes les pièces (14) usinées précédemment qui n'ont pas été reconnues comme rebut.

6. Procédé selon l'une quelconque des revendications 3 à 5, **caractérisé en ce que** la trajectoire de consigne de l'outil (34') optimisée est établie par une moyenne, en particulier pondérée, des trajectoires réelle de l'outil (36) régulées en distance desdites plusieurs pièces (14) usinées précédemment.

7. Procédé selon l'une quelconque des revendications précédentes, **caractérisé en ce que**, lors de l'usinage d'une pièce (14), des positions d'axe (19) de l'outil (12) le long/autour de ses axes de mouvement (18) sont saisies, en particulier en parallèle du temps principal, et la trajectoire réelle de l'outil (36) régulée en distance respective est déterminée sur la base des positions d'axe (19) saisies.

8. Procédé selon l'une quelconque des revendications précédentes, **caractérisé en ce que** les sections de contour (40) sélectionnées de la pièce (14) usinée sont planes, en particulier rectilignes, circulaires ou en arc de cercle.

9. Dispositif d'usinage de pièces (10) avec un outil (12), avec un moyen de mesure de distance (20) destiné à mesurer une distance de travail (22) respective entre l'outil (12) et une pièce (14), ainsi qu'une commande de machine (24) qui déplace l'outil (12), lors de l'usinage d'une pièce (14), le long d'une trajectoire réelle de l'outil (36) régulée en distance, **caractérisé en ce que** la commande de machine (24) est programmée pour mettre en œuvre un procédé selon l'une quelconque des revendications précédentes.
